# EUROPEAN PATENT SPECIFICATION

(11) **EP 1 680 482 B1**
(45) Date of publication and mention of the grant of the patent: **08.10.2008**
(21) Application number: 04782262.2
(22) Date of filing: 26.08.2004
(51) Int. Cl.: C09K 19/54

(54) **SILICONE COMPOSITION AND POLYMER DISPERSED LIQUID CRYSTAL**
SILICONZUSAMMENSETZUNG UND POLYMERDISPERGIERTER FLÜSSIGKRISTALL
COMPOSITION DE SILICONE, ET CRISTAL LIQUIDE DISPERSE DANS UN POLYMERE

(30) Priority: 03.11.2003 US 516783 P
(43) Date of publication of application: 19.07.2006
(73) Proprietor: Dow Corning Corporation, Midland, MI 48686-0994 (US)
(72) Inventor: SU, Kai, Midland, MI 48642 (US); DE GROOT, Jon, Midland, MI 48642 (US); HANNINGTON, Jonathan, Midland, MI 48642 (US)
(74) Representative: Kyle, Diana
(86) International application number: PCT/US2004/027745
(87) International publication number: WO 2005/044950

(56) References cited:
- EP-A- 0 743 350
- US-A- 5 516 455
- US-A- 5 585 035

## Description

### FIELD OF THE INVENTION

The present invention relates to a silicone composition and more particularly to an addition-curable silicone composition comprising a liquid crystal containing two para-phenylene groups and a compatibilizer. The present invention also relates to a polymer dispersed liquid crystal (PDLC) prepared by curing the silicone composition.

### BACKGROUND OF THE INVENTION

Only a few examples of silicone compositions containing liquid crystals and PDLCs formed from such silicone compositions are known in the art. For instance, U.S. Patent No. 5,585,035 to Nerad et al. discloses an optically responsive film that includes liquid crystal dispersed in a polymer matrix that includes siloxane linkages. The film has a transmissivity at -20 °C that is substantially the same as the transmissivity of said film at 20 °C, and a V₉₀ at -20 °C that is less than twice the value at 20 °C, wherein V₉₀ refers to the switching voltage at 90% of the way to maximum transmission required to switch the film between translucent and transmissive states.

U.S. Patent No. 5,516,455 to Jacobine et al. discloses a PDLC composite prepared from at least one multifunctional electron-rich alkene that does not undergo appreciable homopolymerization; a multifunctional thiol; a photoinitiator; and liquid crystal material. According to the '455 patent, the multifunctional electron-rich alkene can be a norborenyl compound with silicone moieties.

The aforementioned PDLCs are typically opaque to incident light in the absence of an electric field and become transparent upon application of the field (or vice-versa). Moreover, the PDLCs transmit light of variable intensity depending on the strength of the electric field. These materials are potentially useful for switchable windows in housing and automobiles. However, such materials are not useful in electro-optic devices used to transmit light having a different phase from the incident light. Consequently, there remains a need for an electrically tunable PDLC for controlling the phase of a transmitted light beam.

### SUMMARY OF THE INVENTION

The present invention is directed to a silicone composition comprising:
(A) 100 parts by weight of an organopolysiloxane having an average of at least two alkenyl groups per molecule, a number-average molecular weight of from 1,000 to 50,000, and an average of from 10 to 90 mol% of silicon-bonded phenyl groups per molecule;
(B) a curing agent selected from (1) a mixture comprising (a) an organohydrogensiloxane having an average of at least two silicon-bonded hydrogen atoms per molecule in an amount sufficient to cure the composition and (b) a catalytic amount of a hydrosilylation catalyst, and (2) a mixture comprising (a) a mercapto-functional compound in an amount sufficient to cure the composition, wherein the mercapto-functional compound is selected from (i) a mercapto-functional organosiloxane having an average of at least two mercaptoalkyl groups per molecule and (ii) a mercapto-functional organic compound having an average of at least two mercapto groups per molecule, and (b) a catalytic amount of a photoinitiator;
(C) 1 to 200 parts by weight of a liquid crystal miscible in components (A) and (B) combined, wherein the liquid crystal is selected from (i) at least one compound having the formula: 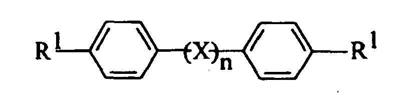 and (ii) a mixture comprising (i) and from 1 to 10% of at least one terphenyl compound having the formula: 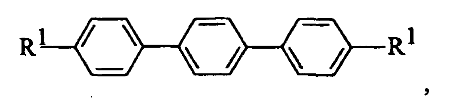 wherein each R¹ is independently selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl, X is a divalent organic group selected from -CH=N-, -N=N-, -N=N(O)-, -CH=CH-, - C≡C-, -C(=O)O-, and -CH=N-N=CH-, and n is 0 or 1; and
(D) 1 to 20 parts by weight of a compatibilizer selected from (i) at least one silicone fluid having the formula:

   R³₃SiO(R³₂SiO)_{w}SiR³₃,

   (ii) at least one biphenyl compound having the formula: 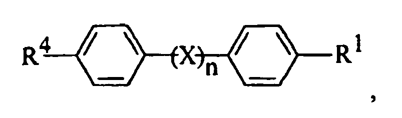 and (iii) 1-phenylnaphthalene, wherein R¹ is selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl; each R³ is independently C₁ to C₆ hydrocarbyl free of aliphatic unsaturation, wherein from 40 to 90 mol% of R³ are phenyl; R⁴ is selected from R⁵₃Si(OSiR⁵₂)₂(CH₂)_{y}- and R⁵₃Si(OSiR⁵₂)₂(CH₂)_{y}O-; wherein R⁵ is C₁ to C₄ hydrocarbyl, y is an integer from 2 to 12, and z is an integer from 0 to 20; n is 0 or 1; and w has value of from 1 to 10.

The present invention is also directed to a PDLC prepared by a method comprising curing the aforementioned silicone composition, wherein the PDLC is transparent and has a refractive index of from 1.42 to 1.6 at 25 °C for light having a wavelength of 589 nm (sodium D line).

The silicone composition of the present invention can be conveniently formulated as a one-part composition having good shelf-stability. Also, the composition can be applied to a substrate by conventional high-speed methods such as spin coating, printing, and spraying. Also, the silicone composition can be readily cured by exposure either to moderate temperatures or radiation, depending on the curing agent. Importantly, the liquid crystal, component (B), is miscible in components (A) and (B) combined. As a result the composition cures to form a PDLC containing liquid crystal droplets having very small diameter.

The PDLC of the present invention has very low light-scattering and high transparency in both the absence and presence of an applied electric field. The degree of light-scattering in a PDLC is directly related to the difference in refractive indices between the liquid crystal and the polymer matrix, and also to the diameter of the liquid crystal droplets. Conventional PDLCs are typically opaque in the off state (zero electric field) due to the mismatch between the refractive index of the liquid crystal and the refractive index of the polymer matrix, and the relatively large droplet size, which causes light scattering. They are transparent in the on state (applied electric field) because the refractive index of the liquid crystal, measured in the direction of light transmission, matches that of the polymer matrix, which reduces light-scattering. Such PDLCs can be regulated to transmit light having a different intensity than the incident light by varying the electric field. On the other hand, the PDLC of the present invention is transparent in both the on state and off state because it contains liquid crystal droplets having a very small diameter, typically less than 1µm, which greatly reduces light-scattering. Importantly, the PDLC can be tuned to transmit light having a phase shift from the incident light by varying the electric field.

The silicone composition of the present invention can be used to prepare a PDLC. The PDLC is useful in tunable waveguide devices for controlling the phase of transmitted light for a particular application. Examples of waveguide devices include interferometric modulators, attenuators, switches, splitters, routers, filters, and gratings.

These and other features, aspects, and advantages of the present invention will become better understood with reference to the following description and appended claims.

### DETAILED DESCRIPTION OF THE INVENTION

As used herein, the term "PDLC" is an abbreviation for polymer dispersed liquid crystal." Also, the "mol%" of silicon-bonded phenyl groups is defined as the ratio of the number of moles of silicon-bonded phenyl groups to the total number of moles of silicon-bonded groups in the organopolysiloxane [component (A)] or silicone fluid [component (D)(i)], multiplied by 100. Also, the term "transparent" means the PDLC has a transmittance of at least 80% for light in the visible region (∼400 to ∼700 nm) of the electromagnetic spectrum. Further, the "refractive index" of the PDLC is defined as the ratio of the velocity of light in a vacuum to the velocity of light in the PDLC at 25 °C for light having a wavelength of 589 nm (sodium D line). Still further, the term "free of aliphatic unsaturation" means the group is free of aliphatic carbon-carbon double bonds and aliphatic carbon-carbon triple bonds.

A silicone composition according to the present invention comprises:
(A) 100 parts by weight of an organopolysiloxane having an average of at least two alkenyl groups per molecule, a number-average molecular weight of from 1,000 to 50,000, and an average of from 10 to 90 mol% of silicon-bonded phenyl groups per molecule;
(B) a curing agent selected from (1) a mixture comprising (a) an organohydrogensiloxane having an average of at least two silicon-bonded hydrogen atoms per molecule in an amount sufficient to cure the composition and (b) a catalytic amount of a hydrosilylation catalyst, and (2) a mixture comprising (a) a mercapto-functional compound in an amount sufficient to cure the composition, wherein the mercapto-functional compound is selected from (i) a mercapto-functional organosiloxane having an average of at least two mercaptoalkyl groups per molecule and (ii) a mercapto-functional organic compound having an average of at least two mercapto groups per molecule, and (b) a catalytic amount of a photoinitiator;
(C) 1 to 200 parts by weight of a liquid crystal miscible in components (A) and (B) combined, wherein the liquid crystal is selected from (i) at least one compound having the formula: 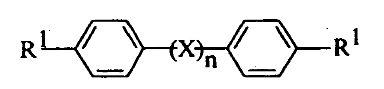 and (ii) a mixture comprising (i) and from 1 to 10% of at least one terphenyl compound having the formula: 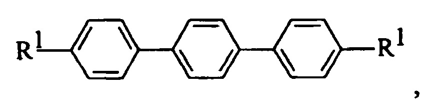 wherein each R¹ is independently selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl, X is a divalent organic group selected from -CH=N-, -N=N-, -N=N(O)-, -CH=CH-,-C≡C-, -C(=O)O-, and -CH=N-N=CH-, and n is 0 or 1; and
(D) 1 to 20 parts by weight of a compatibilizer selected from (i) at least one silicone fluid having the formula:

   R³₃SiO(R³₂SiO)_{w}SiR³₃,

   (ii) at least one biphenyl compound having the formula: 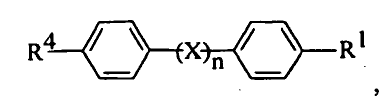 and (iii) 1-phenylnaphthalene, wherein R¹ is selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl; each R³ is independently C₁ to C₆ hydrocarbyl free of aliphatic unsaturation, wherein from 40 to 90 mol% of R³ are phenyl; R⁴ is selected from R⁵₃Si(OSiR⁵₂)_{z}(CH₂)_{y}- and R⁵₃Si(OSiR⁵₂)_{z}(CH₂)_{y}O-; wherein R⁵ is C₁ to C₄ hydrocarbyl, y is an integer from 2 to 12, and z is an integer from 0 to 20; n is 0 or 1; and w has value of from 1 to 10.

Component (A) is at least one organopolysiloxane having an average of at least two alkenyl groups per molecule, a number-average molecular weight of from 1,000 to 50,000, and an average of from 10 to 90 mol% of silicon-bonded phenyl groups per molecule. The organopolysiloxane can have a linear or branched structure. The organopolysiloxane can be a homopolymer or a copolymer. The alkenyl groups typically have from 2 to 10 carbon atoms, alternatively from 2 to 6 carbon atoms. The alkenyl groups in the organopolysiloxane can be located at terminal, pendant, or both terminal and pendant positions. Examples of alkenyl groups include, but are not limited to, vinyl, allyl, butenyl, and hexenyl.

The remaining silicon-bonded organic groups (other than alkenyl) in the organopolysiloxane are independently selected from hydrocarbyl and halogen-substituted hydrocarbyl, both free of aliphatic unsaturation. These monovalent groups typically have from 1 to 20 carbon atoms, alternatively from 1 to 10 carbon atoms, alternatively from 1 to 6 carbon atoms. Examples of hydrocarbyl groups include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, decyl, undecyl, dodecyl, tridecyl, tetradecyl, pentadecyl, hexadecyl, heptadecyl, and octadecyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups include, but are not limited to, 3,3,3-trifluoropropyl, 3-chloropropyl, chlorophenyl, and dichlorophenyl.

The organpolysiloxane typically has a number-average molecular weight of from 1,000 to 50,000, alternatively from 1,500 to 20,000, alternatively from 2,000 to 10,000, where the molecular weight is determined by gel permeation chromatography employing a low angle laser light scattering detector.

The organopolysiloxane typically has an average of from 10 to 90 mol%, alternatively from 20 to 60 mol%, alternatively from 30 to 55 mol%, of silicon-bonded phenyl groups per molecule. When the mol% of silicon-bonded phenyl groups is less than 10 mol%, the PDLC formed by curing the silicone composition has a transparency less than 80%.

Examples of organopolysiloxanes useful in the silicone composition include, but are not limited to, the following polysiloxanes:
(i) a dimethylvinylsiloxy-terminated poly(dimethylsiloxane-methylphenylsiloxane);
(ii) a dimethylvinylsiloxy-terminated poly(methylphenylsiloxane);
(iii) a diphenylvinylsiloxy-terminated poly(dimethylsiloxane-methylphenylsiloxane);
(iv) an organopolysiloxane resin comprising PhSiO_{3/2} units and Me₂ViSiO_{1/2} units;
(v) a dimethylvinylsiloxy-terminated poly(phenylvinylsiloxane); and
(vi) a a diphenylvinylsiloxy-terminated poly(phenylvinylsiloxane); wherein Ph is phenyl and Me is methyl.

Component (A) can be a single organopolysiloxane or a mixture comprising two or more organopolysiloxanes that differ in at least one property, such as structure, viscosity, average molecular weight, siloxane units, and sequence.

Methods of preparing organopolysiloxanes suitable for use in the silicone composition, such as hydrolysis and condensation of organohalosilanes or equilibration of cyclic polydiorganosiloxanes, are well known in the art.

Component (B) is a curing agent selected from (1) a mixture comprising (a) an organohydrogensiloxane having an average of at least two silicon-bonded hydrogen atoms per molecule and (b) a hydrosilylation catalyst, and (2) a mixture comprising (a) a mercapto-functional compound in an amount sufficient to cure the composition, wherein the mercapto-functional compound is selected from (i) a mercapto-functional organosiloxane having an average of at least two mercaptoalkyl groups per molecule and (ii) a mercapto-functional organic compound having an average of at least two mercapto groups per molecule, and (b) a catalytic amount of a photoinitiator, provided when the curing agent is component (B)(2), the alkenyl groups in component (A) are not norbornenyl.

Component (B)(1)(a) is at least one organohydrogensiloxane having an average of at least two silicon-bonded hydrogen atoms per molecule. It is generally understood that crosslinking occurs when the sum of the average number of alkenyl groups per molecule in component (A) and the average number of silicon-bonded hydrogen atoms per molecule in component (B)(1)(a) is greater than four. The silicon-bonded hydrogen atoms in the organohydrogensiloxane can be located at terminal, pendant, or both terminal and pendant positions.

The organohydrogensiloxane can be a disiloxane, trisiloxane, or polysiloxane. The structure of the organohydrogensiloxane can be linear, branched, cyclic, or resinous.
The organohydrogensiloxane typically has a number-average molecular weight less than 1,000, alternatively less than 800, alternatively less than 600.

Examples of organohydrogensiloxanes include, but are not limited to, disiloxanes such as 1,1,3,3-tetramethyldisiloxane and 1,1,3,3-tetraphenyldisiloxane; trisiloxanes such as phenyltris(dimethylsiloxy)silane and 1,3,5-trimethylcyclotrisiloxane; and polysiloxanes such as a trimethylsiloxy-terminated poly(methylhydrogensiloxane), a trimethylsiloxy-terminated poly(dimethylsiloxane/methylhydrogensiloxane), a dimethylhydrogensiloxy-terminated poly(methylhydrogensiloxane), and a resin consisting essentially of H(CH₃)₂SiO_{1/2} units, (CH₃)₃SiO_{1/2} units, and SiO_{4/2} units.

Component (B)(1)(a) can be a single organohydrogensiloxane or a mixture comprising two or more organohydrogensiloxanes that differ in at least one property, such as structure, average molecular weight, viscosity, siloxane units, and sequence.

The concentration of component (B)(1)(a) in the silicone composition of the present invention is sufficient to cure (crosslink) the composition. The exact amount of component (B)(1)(a) depends on the desired extent of cure, which generally increases as the ratio of the number of moles of silicon-bonded hydrogen atoms in component (B)(1)(a) to the number of moles of alkenyl groups in component (A) increases. The concentration of component (B)(1)(a) is typically sufficient to provide from 0.5 to 2.5 silicon-bonded hydrogen atoms, alternatively from 0.9 to 1.9 silicon-bonded hydrogen atoms, per alkenyl group in component (A).

Methods of preparing organohydrogensiloxanes, such as hydrolysis and condensation of organohalosilanes, are well known in the art.

Component (B)(1)(b) is at least one hydrosilylation catalyst that promotes the addition reaction of component (A) with component (B)(1)(a). The hydrosilylation catalyst can be any of the well-known hydrosilylation catalysts comprising a platinum group metal, a compound containing a platinum group metal, or a microencapsulated platinum group metal-containing catalyst. Platinum group metals include platinum, rhodium, ruthenium, palladium, osmium and iridium. Preferably, the platinum group metal is platinum, based on its high activity in hydrosilylation reactions.

Examples of hydrosilylation catalysts include the complexes of chloroplatinic acid and certain vinyl-containing organosiloxanes disclosed by Willing in U.S. Pat. No. 3,419,593, which is hereby incorporated by reference. A specific example of such a catalyst is the reaction product of chloroplatinic acid and 1,3-divinyl-1,1,3,3-tetramethyldisiloxane.

The hydrosilylation catalyst can also be a photoactivated hydrosilylation catalyst. The photoactivated hydrosilylation catalyst can be any hydrosilylation catalyst capable of catalyzing the hydrosilylation of component (A) with component (B)(1)(a) upon exposure to radiation having a wavelength of from 150 to 800 nm.

Examples of photoactivated hydrosilylation catalysts include, but are not limited to, platinum(II) β-diketonate complexes such as platinum(II) bis(2,4-pentanedioate), platinum(II) bis(2,4-hexanedioate), platinum(II) bis(2,4-heptanedioate), platinum(II) bis(1-phenyl-1,3-butanedioate, platinum(II) bis(1,3-diphenyl-1,3-propanedioate), platinum(II) bis(1,1,1,5,5,5-hexafluoro-2,4-pentanedioate); (η-cyclopentadienyl)trialkylplatinum complexes, such as (Cp)trimethylplatinum, (Cp)ethyldimethylplatinum, (Cp)triethylplatinum, (chloro-Cp)trimethylplatinum, and (trimethylsilyl-Cp)trimethylplatinum, where Cp represents cyclopentadienyl; triazene oxide-transition metal complexes, such as Pt[C₆H₅NNNOCH₃]₄, Pt[p-CN-C₆H₄NNNOC₆H₁₁]₄, Pt[p-H₃COC₆H₄NNNOC₆H₁₁]₄, Pt[p-CH₃(CH₂)ₓ-C₆H₄NNNOCH₃]₄, 1,5-cyclooctadiene.Pt[p-CN-C₆H₄NNNOC₆H₁₁]₂, 1,5-cyclooctadiene.Pt[p-CH₃O-C₆H₄NNNOCH₃]₂, [(C₆H₅)₃P]₃Rh[p-CN-C₆H₄NNNOC₆H₁₁], and Pd[p-CH₃(CH₂)ₓ-C₆H₄NNNOCH₃]₂, where x is 1, 3, 5, 11, or 17; (η-diolefin)(σ-aryl)platinum complexes, such as (η⁴-1,5-cyclooctadienyl)diphenylplatinum, η⁴-1,3,5,7-cyclooctatetraenyl)diphenylplatinum, (η⁴-2,5-norboradienyl)diphenylplatinum, (η⁴-1,5-cyclooctadienyl)bis-(4-dimethylaminophenyl)platinum, (η⁴-1,5-cyclooctadienyl)bis-(4-acetylphenyl)platinum, and (η⁴-1,5-cyclooctadienyl)bis-(4-trifluormethylphenyl)platinum. Preferably, the photoactivated hydrosilylation catalyst is a Pt(II) β-diketonate complex and more preferably the catalyst is platinum(II) bis(2,4-pentanedioate).

Component (B)(1)(b) can be a single hydrosilylation catalyst or a mixture comprising two or more different catalysts that differ in at least one property, such as structure, form, platinum group metal, complexing ligand, and thermoplastic resin.

The concentration of component (B)(1)(b) is sufficient to catalyze the addition reaction of component (A) with component (B)(1)(a). The concentration of component (B)(1)(b) is typically sufficient to provide from 0.1 to 1000 ppm of a platinum group metal, alternatively from 1 to 500 ppm of a platinum group metal, or alternatively from 5 to 150 ppm of a platinum group metal, based on the combined weight of components (A), (B), and (C). The rate of cure is very slow below 0.1 ppm of platinum group metal. The use of more than 1000 ppm of platinum group metal results in no appreciable increase in cure rate, and is therefore uneconomical.

Methods of preparing photoactivated hydrosilylation catalysts are well known in the art. For example, methods of preparing platinum(II) β-diketonates are reported by Guo et al. (Chemistry of Materials, 1998, 10, 531-536). Methods of preparing (η-cyclopentadienyl)trialkylplatinum complexes and are disclosed in U.S. Patent No. 4,510,094. Methods of preparing triazene oxide-transition metal complexes are disclosed in U.S. Patent No. 5,496,961. And, methods of preparing (η-diolefin)(σ-aryl)platinum complexes are taught in U.S. Patent No. 4,530,879.

Component (B)(2)(a) is a mercapto-functional compound selected from (i) a mercapto-functional organosiloxane having an average of at least two mercaptoalkyl groups per molecule and (ii) a mercapto-functional organic compound having an average of at least two mercapto groups per molecule. It is generally understood that crosslinking occurs when the sum of the average number of alkenyl groups per molecule in component (A) and the average number of mercapto groups per molecule in component (B)(2)(a) is greater than four.

Component (B(2)(a)(i) is at least one mercapto-functional organosiloxane having an average of at least two mercaptoalkyl groups per molecule. The mercapto-functional organosiloxane typically has a number-average molecular weight less than 5,000, alternatively less than 2,000, alternatively less than 1,000. The mercapto-functional organosiloxane can be a disiloxane, trisiloxane, or polysiloxane. The structure of the mercapto-functional organosiloxane can be linear, branched, cyclic, or resinous. The mercaptoalkyl groups in the organosiloxane can be located at terminal, pendant, or both terminal and pendant positions. The mercaptoalkyl groups typically have from 1 to 10 carbon atoms, alternatively from 1 to 6 carbon atoms. Examples of mercaptoalkyl groups include, but are not limited to, mercaptomethyl, 2-mercaptoethyl, 4-mercaptobutyl, 3-mercapto-2-methylpropyl, and 6-mercaptohexyl.

The remaining silicon-bonded organic groups (other than mercaptoalkyl) in the mercapto-functional organosiloxane are independently selected from hydrocarbyl and halogen-substituted hydrocarbyl, both free of aliphatic unsaturation. These monovalent groups typically have from 1 to 20 carbon atoms, alternatively from 1 to 10 carbon atoms, alternatively from 1 to 6 carbon atoms. Examples of hydrocarbyl groups include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, decyl, undecyl, dodecyl, tridecyl, tetradecyl, pentadecyl, hexadecyl, heptadecyl, and octadecyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups include, but are not limited to, 3,3,3-trifluoropropyl, 3-chloropropyl, chlorophenyl, and dichlorophenyl.

Examples mercapto-functional organosiloxanes include, but are not limited to, disiloxanes such as [HSCH₂CH₂CH₂(Me)₂Si]₂O; trisiloxanes such as [HSCH₂CH₂CH₂(Me)₂SiO]₃Si; and polysiloxanes such as a 3-mercaptopropyldimethylsiloxy-terminated poly(methylsiloxane) and a 3-mercaptopropyldimethylsiloxy-terminated poly(dimethylsiloxane-3-mercaptopropylmethylsiloxane); and an organosiloxane resin consisting essentially of HSCH₂CH₂CH₂SiO_{3/2} units and Me₃SiO_{1/2} units; wherein Me is methyl.

Component (B)(2)(a)(i) can be a single mercapto-functional organosiloxane or a mixture comprising two or more different mercapto-functional organosiloxanes. Methods of preparing mercapto-functional organosiloxanes are well known in the art.

Component (B)(2)(a)(ii) is at least one mercapto-functional organic compound having an average of at least two mercapto groups per molecule. The mercapto-functional organic compound typically has a molecular weight less than 5,000, alternatively less than 2,000, alternatively less than 1,000.

Examples of mercapto-functional organic compounds include, but are not limited to, CH₃CH₂C(CH₂CO₂CH₂CH₂SH)₃, 2,2'-dimercaptodiethyl ether, dipentaerythritolhaxa(3-mercaptopropionate), glycol dimercapto acetate, glycol dimercaptopropionate, pentaerythritol tetra(3-mercaptopropionate), pentaerythritol tetrathioglycolate, polyethylene glycol dimercaptoacetate having the formula HSCH₂COOCH₂(CH₂OCH₂)CH₂OOCCH₂SH, polyethylene glycol di(3-mercaptopropionate) having the formula HSCH₂CH₂COOCH₂(CH₂OCH₂)CH₂OOCCH₂CH₂SH, trimethylolethane tri(3-mercaptopropionate), trimethylolethane trithioglycolate, trimethyolpropoane tri(3-mercaptopropionate), and trimethylolpropane trithioglycolate.

Component (B)(2)(a)(ii) can be a single mercapto-functional compound or a mixture comprising two or more different mercapto-functional compounds. Methods of preparing mercapto-functional organic compounds are well known in the art; many of these compounds are commercially available.

The concentration of component (B)(2)(a) in the silicone composition of the present invention is sufficient to cure (crosslink) the composition. The exact amount of component (B)(2)(a) depends on the desired extent of cure, which generally increases as the ratio of the number of moles of mercapto groups in component (B)(2)(a) to the number of moles of alkenyl groups in component (A) increases. The concentration of component (B)(2)(a) is typically sufficient to provide from 0.5 to 2 mercapto groups, alternatively from 0.9 to 1.1 mercapto groups, per alkenyl group in component (A).

Component (B)(2)(b) is at least one photoinitiator. The photoinitiator can be any free radical initiator capable of catalyzing the addition reaction of component (A) with component (B)(1)(a) upon exposure to ultraviolet radiation having a wavelength of from 250 to 400 nm.

Examples of photoinitiators include, but are not limited to, benzophenone, acetonaphthone, acetophenone, benzoin methylether, benzoin isobutylether, 2,2-diethoxyacetophenone, 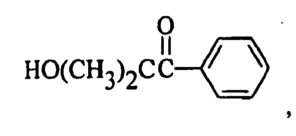 and

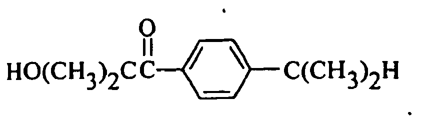

The photoinitiator can also be a polysilane, such as the phenylmethylpolysilanes defined by West in U.S. Pat. No. 4,260,780, which is hereby incorporated by reference; the aminated methylpolysilanes defined by Baney et al. in U.S. Pat. No. 4,314,956, which is hereby incorporated by reference; the methylpolysilanes of Peterson et al. in U.S. Pat. No. 4,276,424, which is hereby incorporated by reference; and the polysilastyrene defined by West et al. in U.S. Pat. No. 4,324,901, which is hereby incorporated by reference.

Component (B)(2)(b) can be a single photoinitiator or a mixture comprising two or more different photoinitiators.

The concentration of component (B)(2)(b) is sufficient to catalyze the addition reaction of component (A) with component (B)(2)(a). The concentration of component (B)(2)(b) is typically from 0.1 to 6% (w/w), alternatively from 1 to 3% (w/w), based on the combined weight of components (A), (B), and (C).

Component (C) is a liquid crystal miscible in components (A) and (B) combined, wherein the liquid crystal is selected from (i) at least one compound having the formula: 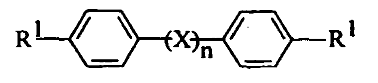 and (ii) a mixture comprising (i) and from 1 to 10% of at least one terphenyl compound having the formula: 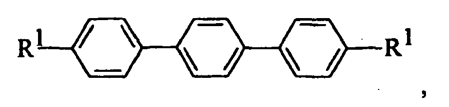 wherein each R¹ is independently selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl, X is a divalent organic group selected from -CH=N-, -N=N-, -N=N(O)-, -CH=CH-,-C≡C-, -C(=O)O-, and -CH=N-N=CH-, and n is 0 or 1. As used herein, the term "miscible" means component (C) is completely soluble in components (A) and (B) combined in the stated proportions.

The liquid crystal can be nematic, smetic, or cholesteric. Furthermore, the liquid crystal can have either positive or negative diamagnetic anisotropy.

Component (C)(i) is at least one compound having the formula: 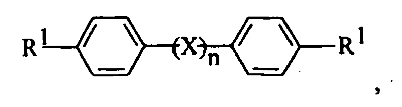 wherein R¹, X, and n are as defined above. When n is 0, component (C)(i) has the formula: 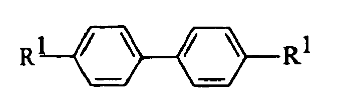 wherein R¹ is as defined above.

Alkyl groups represented by R¹ and R² typically have from 1 to 20 carbon atoms, alternatively from 1 to 10 carbon atoms, alternatively from 1 to 6 carbon atoms. Alkyl groups containing at least 3 carbon atoms can have a branched or unbranched structure. Examples of alkyl groups include, but are not limited to, methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, decyl, undecyl, dodecyl, tridecyl, tetradecyl, pentadecyl, hexadecyl, heptadecyl, and octadecyl.

Cycloalkyl groups represented by R¹ typically have from 5 to 8 carbon atoms. Examples of cycloalkyl groups include, but are not limited to, cyclopentyl, cyclohexyl, and methylcyclohexyl.

Examples of compounds suitable for use as component (C)(i) include, but are not limited to, 4-alkyl-4'cyanobiphenyl compounds, such as 4-n-pentyl-4'-cyanobiphenyl, 4-n-hexyl-4'-cyanobiphenyl, 4-n-octyl-4'-cyanobiphenyl; 4-alkyl-4'-alkoxybiphenyl, such as 4-n-pentyl-4'-ethoxybiphenyl; 4-alkyl-4'-halobiphenyl, such as 4-n-butyl-4'-fluorobiphenyl; and compounds having the formula: 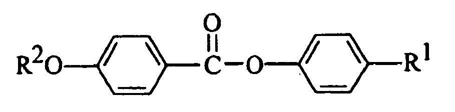 where R¹ and R² are C₁ to C₂₀ alkyl, as exemplified above

Component (C)(i) can be a single compound or a mixture comprising two or more different compounds, each as described above.

Methods of preparing liquid crystals suitable for use as component (C)(i) are well known in the art; many of these compounds are commercially available.

Component (C)(ii) is a mixture comprising (C)(i) and from 1 to 10% of at least one terphenyl compound having the formula: 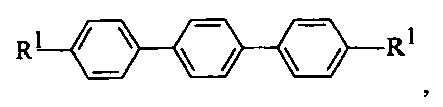 wherein R¹ is as defined and exemplified above.

Examples of terphenyl compounds include, but are not limited to, 4-alkyl-4"-cyanoterphenyl compounds, such as 4-n-pentyl-4"-cyanoterphenyl, 4-n-hexyl-4"-cyanoterphenyl, 4-n-octyl-4"-cyanoterphenyl; 4-alkyl-4"-alkoxyterphenyl, such as 4-n-pentyl-4"-ethoxyterphenyl; and 4-alkyl-4"-halolterphenyl, such as 4-n-butyl-4"-fluoroterphenyl.

The concentration of the terphenyl compound in component (C)(ii) is typically from 1 to 10% (w/w), alternatively from 1 to 8% (w/w), alternatively from 4 to 7% (w/w), based on the total weight of component (C)(ii).

Methods of preparing terphenyl compounds suitable for use in component (C)(ii) are well known in the art; many of these compounds are commercially available.

The concentration of component (C) is typically from 1 to 200 parts by weight, alternatively from 1 to 110 parts by weight, alternatively from 10 to 100 parts by weight, alternatively from 30 to 90 parts by weight, per 100 parts by weight of component (A). When the concentration of component (C) is less than 1 party by weight.

Component (D) is a compatibilizer selected from (i) at least one silicone fluid having the formula:

R³₃SiO(R³₂SiO)_{w}SiR³₃,

(ii) at least one biphenyl compound having the formula: 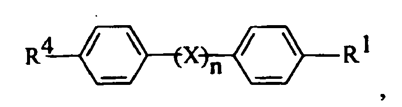 and (iii) 1-phenylnaphthalene, wherein R¹ is selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl; each R³ is independently C₁ to C₆ hydrocarbyl free of aliphatic unsaturation, wherein from 40 to 90 mol% of R³ are phenyl; R⁴ is selected from R⁵₃Si(OSiR⁵₂)_{z}(CH₂)_{y}- and R⁵₃Si(OSiR⁵₂)_{z}(CH₂)_{y}O-; wherein R⁵ is C₁ to C₄ hydrocarbyl, y is an integer from 2 to 12, and z is an integer from 0 to 20; n is 0 or 1; and w has value of from 1 to 10. The compatibilizer improves the miscibility of the liquid crystal in components (A) and (B) combined, particularly at high concentrations in the stated range.

Component (D)(i) is at least one silicone fluid having the formula:

R³₃SiO(R³₂SiO)_{w}SiR³₃

wherein each R³ is independently C₁ to C₆ hydrocarbyl free of aliphatic unsaturation,
wherein from 40 to 90 mol% of R³ are phenyl, and w has a value of from 1 to 10.
Alternatively, from 50 to 90 mol% of R³ or from 60 to 90 mol% of R³, are phenyl Alternatively, w has a value of from 1 to 6.

The hydrocarbyl groups represented by R³ are free of aliphatic unsaturation. These groups typically have from 1 to 6 carbon atoms, alternatively from 1 to 3 carbon atoms. Acyclic hydrocarbyl groups containing at least 3 carbon atoms can have a branched or unbranched structure. Examples of hydrocarbyl groups free of aliphatic unsaturation include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, and hexyl; cycloalkyl, such as cyclopentyl and cyclohexyl; and phenyl.

Examples of silicone fluids include, but are not limited to, siloxanes having the following formulae: MePh₂SiO(PhMeSiO)SiPh₂Me, MePh₂SiO(Me₂SiO)SiPh₂Me, MePh₂SiO(PhMeSiO)₆ SiPh₂Me, MePh₂SiO(PhMeSiO)₂(Me₂SiO)SiPh₂Me, and MePh₂SiO(PhMeSiO)(Me₂SiO)SiPh₂Me, where Me is methyl and Ph is phenyl.

Component (D)(i) can be a single silicone fluid or a mixture comprising two or more different silicone fluids, each as described above. Methods of preparing silicone fluids are well known in the art; many of these fluids are commercially available.

Component (D)(ii) is at least one biphenyl compound having the formula: 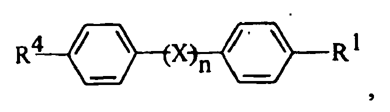 wherein R¹ is selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl; R⁴ is selected from R⁵₃Si(OSiR⁵₂)_{z}(CH₂)_{y}- and R⁵₃Si(OSiR⁵₂)_{z}(CH₂)_{y}O-; wherein R⁵ is C₁ to C₄ hydrocarbyl, y is an integer from 2 to 12, and z is an integer from 0 to 20; and n is 0 or 1. Alternatively, y is an integer from 4 to 10. Also, alternatively, z is an integer from 2 to 12 or 2 to 6.

Examples of hydrocarbyl groups represented by R⁵ include, but are not limited to, alkyl, such as methyl, ethyl, propyl, 1-methylethyl, butyl, 1-methylpropyl, 2-methylpropyl, 1,1-dimethylethyl; alkenyl, such as vinyl, allyl, and propenyl; and alkynyl, such as ethynyl and propynyl.

Examples of biphenyl compounds suitable for use as component (D)(ii) include, but are not limited to, compounds having the following formulae: 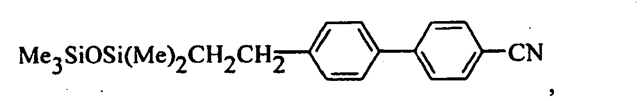 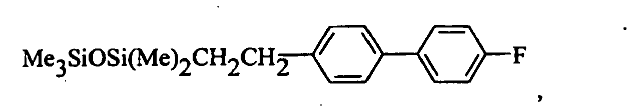 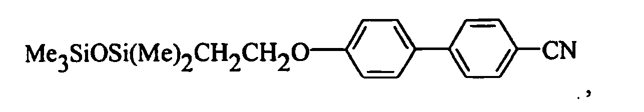 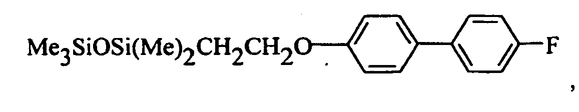 and

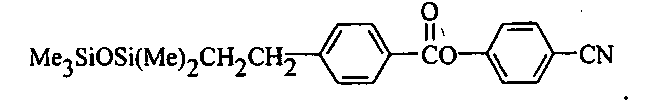

Component (D)(ii) can be a single biphenyl compound or a mixture comprising two or more different biphenyl compounds, each as described above.

Component (D)(ii) can be prepared by reacting (a) an organohydrogensiloxane having the formula R⁵₃Si(OSiR⁵₂)_{z-1} OSiR⁵₂H with an alkenyl-substituted biphenyl compound having the formula: 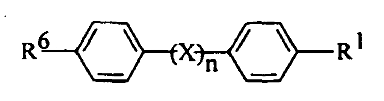 in the presence of (c) a hydrosilylation catalyst and (d) an organic solvent, wherein R¹, R⁵, X, n, and z are as defined above, and R⁶ is selected from CH₂=CH-(CH₂)_{y-2}- and CH₂=CH-(CH₂)_{y-2}O-, wherein y is as defined above. The organohydrogensiloxane, alkenyl-substituted biphenyl compound, hydrosilylation catalyst, and organic solvent can be combined in any order. The reaction is typically carried out at temperature of from room temperature (∼22 °C) to 150 °C. The reaction time depends on several factors, such as the structures of components (a) and (b) and the temperature. The time of reaction is typically from 30 min to 24 h at a temperature of from 45 to 90 °C. Examples of the hydrosilylation catalyst are as described for component (B)(1)(b) above. Examples of organic solvents include, but are not limited to, saturated aliphatic hydrocarbons, such as n-pentane and n-hexane; and aromatic hydrocarbons, such as benzene and toluene.

The mole ratio of component (a) to alkenyl-substituted biphenyl compound (b) is typically from 1.5 to 1, alternatively from 1 to 1. The concentration of the hydrosilylation catalyst (c) is sufficient to catalyze the addition reaction of organohydrogensiloxane (a) with alkenyl-substituted biphenyl compound (b). Typically, the concentration of the hydrosilylation catalyst (c) is typically sufficient to provide from 0.1 to 1000 ppm of a platinum group metal, alternatively from 1 to 500 ppm of a platinum group metal, alternatively from 5 to 150 ppm of a platinum group metal, based on the combined weight of components (a) and (b). The concentration of the organic solvent is typically from 1 to 60% (w/w), alternatively from 1 to 10% (w/w), based on the total weight of the reaction mixture.

Component (D)(iii) is 1-phenylnaphthanlene, having the formula:

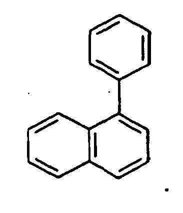

The concentration of component (D) is typically from 1 to 20 parts by weight, alternatively form 1 to 10 parts by weight, alternatively from 2 to 7 parts by weight, per 100 parts by weight of component (A).

The silicone composition can comprise additional ingredients, provided the ingredient does not prevent the composition from curing to form a polymer dispersed liquid crystal, as described below. For example, the silicone composition can further comprise at least one organic solvent. Examples of organic solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; and halogenated aromatic hydrocarbons such as bromobenzene and chlorobenzene. The organic solvent can be a single organic solvent or a mixture comprising two or more different organic solvents, each as defined above. The concentration of the organic solvent in the silicone composition of the present invention is typically from 1 to 60% (w/w), alternatively from 1 to 10% (w/w), based on the total weight of the composition.

When the silicone composition contains component (B)(1)(b), the composition can further comprise at least one hydrosilylation catalyst inhibitor. Examples of hydrosilylation catalyst inhibitors include various "ene-yne" systems such as 3-methyl-3-penten-1-yne and 3,5-dimethyl-3-hexen-1-yne; acetylenic alcohols such as 3,5-dimethyl-1-hexyn-3-ol, 1-ethynyl-1-cyclohexanol, and 2-phenyl-3-butyn-2-ol; maleates and fumarates, such as the well known dialkyl, dialkenyl, and dialkoxyalkyl fumarates and maleates; and cyclovinylsiloxanes.

The concentration of the hydrosilylation catalyst inhibitor in the present silicone composition is sufficient to retard curing of the composition at ambient temperature without preventing or excessively prolonging cure at elevated temperatures. Inhibitor concentrations as low as one mole of inhibitor per mole of platinum group metal will in some instances yield a satisfactory storage stability and cure rate. In other instances, inhibitor concentrations of up to 500 or more moles of inhibitor per mole of platinum group metal may be required. The optimum concentration for a particular inhibitor in a given silicone composition can be readily determined by routine experimentation.

The silicone composition of the present invention can be a one-part composition comprising components (A), (B), (C), and (D) in a single part or, alternatively, a multi-part composition comprising components (A), (B), (C), and (D) in two or more parts. In a multi-part composition containing component (B)(1), components (A), (B)(1)(a), and (B)(1)(b) are typically not present in the same part unless an inhibitor is also present. Similarly, in a multi-part composition containing component (B)(2), components (A), (B)(2)(a), and (B)(2)(b) are typically not present in the same part, unless the composition is protected from light. For example, a multi-part silicone composition can comprise a first part containing a portion of component (A), all of component (B)(1)(b), and all of component (C), and a second part containing the remaining portion of component (A), all of component (B)(1)(a), and all of component (D).

The one-part silicone composition of the instant invention can be prepared by combining components (A) through (D) and any optional ingredients in the stated proportions at ambient temperature with or without the aid of a solvent, which is described above. Although the order of addition of the various components is not critical when the silicone composition is to be used immediately, the hydrosilylation catalyst, component (B)(1)(b), is preferably added last at a temperature below about 30 °C to prevent premature curing of the composition. Also, the multi-part silicone composition of the present invention can be prepared by combining the particular components designated for each part.

Mixing can be accomplished by any of the techniques known in the art such as milling, blending, and stirring, either in a batch or continuous process. The particular device is determined by the viscosity of the components and the viscosity of the final silicone composition.

According to the present invention, a PDLC is prepared by a method comprising curing the aforementioned silicone composition, wherein the PDLC is transparent and has a refractive index of from 1.42 to 1.6 at 25 °C for light having a wavelength of 589 nm (sodium D line). The PDLC typically has a transmittance of at least 80%, alternatively at least 90%, alternatively at least 95%, for light in the visible region (∼400 to ∼700 nm) of the electromagnetic spectrum. The PDLC typically has a refractive index of from 1.42 to 1.6, alternatively from 1.48 to 1.54, at 25 °C for light having a wavelength of 589 nm.

The silicone composition can be cured by exposure to ambient temperature, elevated temperature, or radiation, depending on the cure mechanism. For example a one-part hydrosilylation-curable silicone composition comprising components (A), (B)(1)(a), (B)(1)(b),(C), and (D), wherein component (B)(1)(b) is not a photoactivated hydrosilyation catalyst, is typically cured by exposing the composition to a temperature of from room temperature (∼22 °C) to 150 °C, alternatively from room temperature to 75 °C for an amount of time sufficient to form the PDLC of the present invention. For example, the silicone composition is typically cured by exposing the composition to a temperature of from 20 to 30 °C for 30 min to 24 h, alternatively from 40 to 75 °C for 1 to 60 min.

A hydrosilylation-curable silicone composition comprising components (A), (B)(1)(a), (B)(1)(b),(C), and (D), wherein component (B)(1)(b) is a photoactivated hydrosilyation catalyst is typically cured by exposing the composition to radiation having a wavelength of from 150 to 800 nm, alternatively from 250 to 400 nm. The light source is typically a medium pressure mercury-arc lamp. The dose of radiation is typically from 5 to 200 mJ/cm², alternatively from 20 to 100 mJ/cm².

A radiation-curable silicone composition comprising components (A),(B)(2)(a), (B)(2)(b),(C), and (D) is typically cured by exposing the composition to radiation having a wavelength of from 250 to 400 nm. The light source is typically a medium pressure mercury-arc lamp. The dose of radiation is typically from 5 to 200 mJ/cm², alternatively from 20 to 100 mJ/cm².

The silicone composition of the present invention can be conveniently formulated as a one-part composition having good shelf-stability. Also, the composition can be applied to a substrate by conventional high-speed methods such as spin coating, printing, and spraying. Also, the silicone composition can be readily cured by exposure either to moderate temperatures or radiation, depending on the curing agent. Importantly, the liquid crystal, component (B), is miscible in components (A) and (B) combined. As a result the composition cures to form a PDLC containing liquid crystal droplets having very small diameter.

The PDLC of the present invention has very low light-scattering and high transparency in both the absence and presence of an applied electric field. The degree of light-scattering in a PDLC is directly related to the difference in refractive indices between the liquid crystal and the polymer matrix, and also to the diameter of the liquid crystal droplets. Conventional PDLCs are typically opaque in the off state (zero electric field) due to the mismatch between the refractive index of the liquid crystal and the refractive index of the polymer matrix, and the relatively large droplet size, which causes light scattering. They are transparent in the on state (applied electric field) because the refractive index of the liquid crystal, measured in the direction of light transmission, matches that of the polymer matrix, which reduces light-scattering. Such PDLCs can be regulated to transmit light having a different intensity than the incident light by varying the electric field. On the other hand, the PDLC of the present invention is transparent in both the on state and off state because it contains liquid crystal droplets having a very small diameter, typically less than 1µm, which greatly reduces light-scattering. Importantly, the PDLC can be tuned to transmit light having a phase shift from the incident light by varying the electric field.

The silicone composition of the present invention can be used to prepare a PDLC. The PDLC is useful in tunable waveguide devices for controlling the phase of transmitted light for a particular application. Examples of waveguide devices include interferometric modulators, attenuators, switches, splitters, routers, filters, and gratings.

### EXAMPLES

The following examples are presented to better illustrate the silicone composition and PDLC of the present invention, but are not to be considered as limiting the invention, which is delineated in the appended claims. Unless otherwise noted, all parts and percentages reported in the examples are by weight. The following methods and materials were employed in the examples:

### Degree of Circular Polarization

PDLC test specimens having a length, width, and thickness of 10 mm, 0.5 mm, and 0.5 mm, respectively, were prepared by disposing the silicone composition between two 0.5-mm thick brass electrodes separated by a distance of 0.5 mm on a glass microscope slide, covering the composition with a glass cover slip, and then curing the composition under nitrogen with a portable UV lamp at 365 nm for 2 min.

The degree of circular polarization of a PDLC film as a function of applied voltage was determined using a Thor Model PA510 polarimeter employing plane polarized light having a wavelength of 633 nm at an angle of incidence of 45° to the electric field. The degree of circular polarization, expressed as a percentage, was measured at 0 V, 400 V, 800 V, and 1200 V at temperatures of 10 °C, 17.5 °C, and 25 °C.

### Example 1

A curable silicone composition was prepared by thoroughly mixing the following components in an amber bottle: 24.23 g of a dimethylvinylsiloxy-terminated organpolysiloxane consisting essentially of 70 mol% of PhMeSiO_{2/2} units, 27 mol% of Me₂SiO_{2/2} units, and 3 mol% of Me₂ViSiO_{1/2} units, wherein the organopolysiloxane has a number-average molecular weight of 6,161 and a weight-average molecular weight of 11,320; 1.002 g of a mercapto-function compound having the formula CH₃CH₂C(CH₂CO₂CH₂CH₂SH)₃; and 0.218 g of Darocur 4265 (BASF Corporation), a photoinitiator consisting of 50% of 2-hydroxy-2-methyl-1-phenyl-propan-1-one and 50% of 2,4,6-trimethylbenzoyldiphenylphosphine oxide. The silicone composition (0.409 g) was combined with 0.055 g of Dow Coming 705 Fluid, a mixture consisting of 90% trimethylpentaphenyltrisiloxane and 10% tetramethylhexaphenyltetrasiloxane; and 0.111 g of liquid crystal E7 (Merck NB-SC, UK), a mixture consisting of 51 % of 4-pentyl-4'-cyanobiphenyl, 25% of 4-heptyl-4'-cyanobiphenyl, 16% of 4-octyl-4'-cyanobiphenyl, and 8% of 4-pentyl-4"-cyanoterphenyl. The degree of circular polarization for the PDLC prepared from this composition is shown in Table 2.

**Table 2**

| | Degree of Circular Polarization (%) | | | | | | |
|---|---|---|---|---|---|---|---|
| Temperature (°C) | 0 V | 200 | 400 | 600 | 800 | 1000 | 1200 |
| 10 | 0.038 | 0.161 | 0.521 | 1.075 | 1.791 | 2.710 | 3.817 |
| 17.5 | -0.066 | 0.061 | 0.294 | 0.727 | 1.277 | 1.998 | 2.792 |
| 25 | -0.003 | 0.000 | 3.139 | 0.405 | 0.753 | 1.224 | 1.758 |

## Claims

1. A silicone composition comprising:
(A) 100 parts by weight of an organopolysiloxane having an average of at least two alkenyl groups per molecule, a number-average molecular weight of from 1,000 to 50,000, and an average of from 10 to 90 mol% of silicon-bonded phenyl groups per molecule (defined as the ratio of the number of moles of silicon-bonded phenyl groups to the total number of moles of silicon-bonded groups in the organopolysiloxane [component (A)], multiplied by 100);
(B) a curing agent selected from (1) a mixture comprising (a) an organohydrogensiloxane having an average of at least two silicon-bonded hydrogen atoms per molecule in an amount sufficient to cure the composition and (b) a catalytic amount of a hydrosilylation catalyst, and (2) a mixture comprising (a) a mercapto-functional compound in an amount sufficient to cure the composition, wherein the mercapto-functional compound is selected from (i) a mercapto-functional organosiloxane having an average of at least two mercaptoalkyl groups per molecule and (ii) a mercapto-functional organic compound having an average of at least two mercapto groups per molecule, and (b) a catalytic amount of a photoinitiator;
(C) 1 to 200 parts by weight of a liquid crystal miscible in components (A) and (B) combined, wherein the liquid crystal is selected from (i) at least one compound having the formula: 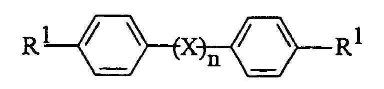 and (ii) a mixture comprising (i) and from 1 to 10% of at least one terphenyl compound having the formula: 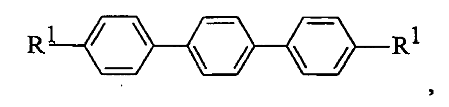 wherein each R¹ is independently selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl, X is a divalent organic group selected from -CH=N-, -N=N-, -N=N(O)-, -CH=CH-, - C≡C-, -C(=O)O-, and -CH=N-N=CH-, and n is 0 or 1; and
(D) 1 to 20 parts by weight of a compatibilizer selected from (i) at least one silicone fluid having the formula:
R³₃SiO(R³₂SiO)_{w}SiR³₃,
(ii) at least one biphenyl compound having the formula: 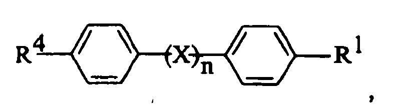 and (iii) 1-phenylnaphthalene, wherein R¹ is selected from C₁ to C₂₀ alkyl, C₅ to C₈ cycloalkyl, -OR², -O(O=)CR², -C≡N, -NO₂, -CH=CHCOOR², -F, -Cl, -Br, and -I, wherein R² is C₁ to C₂₀ alkyl; each R³ is independently C₁ to C₆ hydrocarbyl free of aliphatic unsaturation, wherein from 40 to 90 mol% of R³ are phenyl; R⁴ is selected from R⁵₃Si(OSiR⁵₂)_{z}(CH₂)_{y}- and R⁵₃Si(OSiR⁵₂)_{z}(CH₂)_{y}O-; wherein R⁵ is C₁ to C₄ hydrocarbyl, y is an integer from 2 to 12, and z is an integer from 0 to 20; n is 0 or 1; and w has value of from 1 to 10.

2. The composition according to claim 1, wherein the organopolysiloxane of component (A) has an average of from 20 to 60 mol% of silicon-bonded phenyl groups per molecule.

3. The composition according to claims 1 or 2, wherein component (B) is component (B)(1).

4. The composition according to claims 1 or 2, wherein component (B) is component (B)(2).

5. The composition according to any of claims 1 to 4, wherein component (C) is component (C)(i).

6. The composition according to any of claims 1 to 4, wherein component (C) is component (C)(ii).

7. The composition according to any of claims 1 to 6, wherein the concentration of component (C) is from 1 to 110 parts by weight per 100 parts by weight of component (A).

8. A PDLC prepared by a method comprising curing the silicone composition according to any of claims 1 to 7, wherein the PDLC is transparent (defined as having a transmittance of at least 80% for light in the visible region (∼400∼700nm) of the electromagnetic spectrum) and has a refractive index of from 1.42 to 1.6 at 25 °C for light having a wavelength of 589 nm.

## Patentansprüche

1. Siliconzusammensetzung, enthaltend:
(A) 100 Gewichtsteile eines Organopolysiloxans mit durchschnittlich mindestens zwei Alkenylgruppen pro Molekül, einem zahlenmittleren Molekulargewicht von 1.000 bis 50.000 und durchschnittlich 10 bis 90 Mol-% siliciumgebundene Phenylgruppen pro Molekül (definiert als das Verhältnis der Molzahl von siliciumgebundenen Phenylgruppen zu der Gesamtmolzahl von siliciumgebundenen Gruppen in dem Organopolysiloxan [Komponente A] multipliziert mit 100);
(B) ein Härtungsmittel, ausgewählt aus (1) einer Mischung, enthaltend
(a) ein Organohydrogensiloxan mit durchschnittlich mindestens zwei siliciumgebundenen Wasserstoffatomen pro Molekül in einer Menge, die ausreicht, um die Zusammensetzung zu härten, und (b) eine katalytische Menge eines Hydrosilylierungskatalysators, und (2) einer Mischung, enthaltend (a) eine mercaptofunktionelle Verbindung in einer Menge, die ausreicht, um die Zusammensetzung zu härten, wobei die mercaptofunktionelle Verbindung aus (i) einem mercaptofunktionellen Organosiloxan mit durchschnittlich mindestens zwei Mercaptoalkylgruppen pro Molekül und (ii) einer mercaptofunktionellen organischen Verbindung mit durchschnittlich mindestens zwei Mercaptogruppen pro Molekül ausgewählt ist, und
(b) eine katalytische Menge eines Photoinitiators;
(C) 1 bis 200 Gewichtsteile einer kristallinen Flüssigkeit, die in der Kombination von Komponenten (A) und (B) mischbar ist, wobei die kristalline Flüssigkeit ausgewählt ist aus (i) mindestens einer Verbindung mit der Formel: 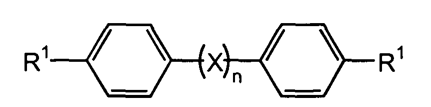 und (ii) einer Mischung, die (i) und 1 bis 10% mindestens einer Terphenylverbindung mit der Formel: 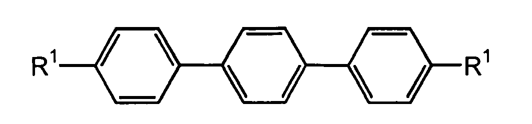 enthält, worin jedes R¹ unabhängig voneinander ausgewählt ist aus C₁- bis C₂₀-Alkyl, C₅- bis C₈-Cycloalkyl, -OR², -O(O=)CR², -C≡N, -NO₂, -CH=CHCOOR², -F, -Cl, -Br und -I, worin R² gleich C₁- bis C₂₀-Alkyl ist, X eine divalente organische Gruppe, ausgewählt aus -CH=N-, -N=N-, -N=N(O)-, -CH=CH-, -C≡C-, -C(=O)O- und -CH=N-N=CH-, ist und n gleich 0 oder 1 ist, und
(D) 1 bis 20 Gewichtsteile eines Kompatibilisierungsmittels, ausgewählt aus (i) mindestens einer Siliconflüssigkeit mit der Formel:
R³₃SiO(R³₂SiO)_{w}SiR³₃,
(ii) mindestens einer Biphenylverbindung mit der Formel: 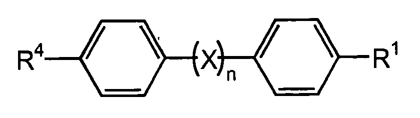 und (iii) 1-Phenylnaphthalin, worin R¹ ausgewählt ist aus C₁- bis C₂₀-Alkyl, C₅- bis C₈-Cycloalkyl, -OR², -O(O=)CR², -C≡N, -NO₂, -CH=CHCOOR², -F, -Cl, -Br und -I, worin R² gleich C₁- bis C₂₀-Alkyl ist; jedes R³ unabhängig C₁- bis C₆-Hydrocarbyl frei von aliphatischer Ungesättigtheit ist, wobei 40 bis 90 Mol-% der R³ Phenyl sind; R⁴ ausgewählt ist aus R⁵₃Si(OSiR⁵₂)_{z}(CH₂)_{y}- und R⁵₃Si(OSiR⁵₂)_{z}(CH₂)_{y}O-, worin R⁵ gleich C₁- bis C₄-Hydrocarbyl ist, y eine ganze Zahl von 2 bis 12 ist und z eine ganze Zahl von 0 bis 20 ist; n gleich 0 oder 1 ist und w einen Wert von 1 bis 10 hat.

2. Zusammensetzung nach Anspruch 1, wobei das Organopolysiloxan der Komponente (A) durchschnittlich 20 bis 60 Mol-% siliciumgebundene Phenylgruppen pro Molekül aufweist.

3. Zusammensetzung nach Anspruch 1 oder 2, wobei Komponente (B) Komponente (B)(1) ist.

4. Zusammensetzung nach Anspruch 1 oder 2, wobei Komponente (B) Komponente (B)(2) ist.

5. Zusammensetzung gemäß einem der Ansprüche 1 bis 4, wobei Komponente (C) Komponente (C)(i) ist.

6. Zusammensetzung gemäß einem der Ansprüche 1 bis 4, wobei Komponente (C) Komponente (C)(ii) ist.

7. Zusammensetzung gemäß einem der Ansprüche 1 bis 6, wobei die Konzentration der Komponente (C) von 1 bis 110 Gewichtsteilen pro 100 Gewichtsteile Komponente (A) reicht.

8. Ein PDLC, der nach einem Verfahren hergestellt ist, das Härten der Siliconzusammensetzung gemäß einem der Ansprüche 1 bis 7 umfasst, wobei der PDLC transparent ist (definiert als eine Durchlässigkeit von mindestens 80% für Licht im sichtbaren Bereich (-400-700 nm) des elektromagnetischen Spektrums aufweisend) und einen Brechungsindex von 1,42 bis 1,6 bei 25°C für Licht mit einer Wellenlänge von 589 nm hat.

## Revendications

1. Composition de silicone comprenant :
(A) 100 parties en poids d'un organopolysiloxane ayant en moyenne au moins deux groupes alcényle par molécule, une masse moléculaire moyenne en nombre de 1 000 à 50 000 et en moyenne de 10 à 90 % en moles de groupes phényle liés à du silicium par molécule (défini en tant que rapport du nombre de moles de groupes phényle liés à du silicium en fonction du nombre de moles de groupes liés à du silicium dans l'organopolysiloxane [composant (A)], multiplié par 100) ;
(B) un agent durcissant choisi parmi (1) un mélange comprenant (a) un organohydrogénosiloxane ayant en moyenne au moins deux atomes d'hydrogène liés à du silicium par molécule en quantité suffisante pour durcir la composition et (b) une quantité catalytique d'un catalyseur d'hydrosilylation et (2) un mélange comprenant (a) un composé à fonction mercapto en quantité suffisante pour durcir la composition, où le composé à fonction mercapto est choisi parmi (i) un organosiloxane à fonction mercapto ayant en moyenne au moins deux groupes mercaptoalkyle par molécule et (ii) un composé organique à fonction mercapto ayant en moyenne au moins deux groupes mercapto par molécule et (b) une quantité catalytique de photoinitiateur ;
(C) 1 à 200 parties en poids d'un cristal liquide miscible dans les composants (A) et (B) combinés, où le cristal liquide est choisi parmi (i) au moins un composé de formule : 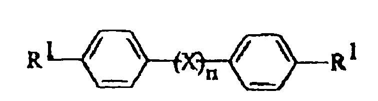 et (ii) un mélange comprenant (i) et de 1 à 10 % d'au moins un composé terphényle de formule : 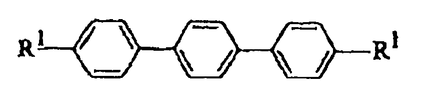 dans laquelle chaque R¹ est indépendamment choisi parmi un groupe alkyle en C₁-C₂₀, un groupe cycloalkyle en C₅-C₈, -OR², -O(O=)CR², -C=N, -NO₂, -CH=CHCOOR², -F, -Cl, -Br et -I, où R² est un groupe alkyle en C₁-C₂₀, X est un groupe organique divalent choisi parmi -CH=N-, -N=N-, -N=N(O)-, -CH=CH-, -C=C-, -C(=O)O- et -CH=N-N=CH- et n vaut 0 ou 1 ; et
(D) 1 à 20 parties en poids d'un agent de compatibilité choisi parmi (i) au moins une silicone liquide de formule :
R³₃SiO(R³₂SiO)_{w}SiR³₃,
(ii) au moins un composé biphényle de formule : 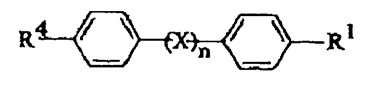 et (iii) un groupe 1-phénylnaphtalène, où R¹ est choisi parmi un groupe alkyle en C₁-C₂₀, un groupe cycloalkyle en C₅-C₈, -OR², -O(O=)CR², -C=N, -NO₂, -CH=CHCOOR², -F,-Cl, -Br et -I, où R² est un groupe alkyle en C₁-C₂₀ ; chaque R³ est indépendamment un groupe hydrocarbyle en C₁-C₆ sans insaturation aliphatique, où 40 à 90 % en moles de R³ sont un groupe phényle ; R⁴ est choisi parmi R⁵₃Si(OSiR⁵₂)_{z}(CH₂)_{y}- et R⁵₃Si(OSiR⁵₂)_{z}(CH₂)_{y}O- ; où R⁵ est un groupe hydrocarbyle en C₁-C₄, y est un entier valant 2 à 12 et z est un entier valant 0 à 20 ; n vaut 0 ou 1 ; et w vaut 1 à 10.

2. Composition selon la revendication 1, dans laquelle l'organopolysiloxane du composant (A) a en moyenne de 20 à 60 % en moles de groupes phényle liés à du silicium par molécule.

3. Composition selon les revendications 1 ou 2, dans laquelle le composant (B) est le composant (B)(1).

4. Composition selon les revendications 1 ou 2, dans laquelle le composant (B) est le composant (B)(2).

5. Composition selon l'une quelconque des revendications 1 à 4, dans laquelle le composant (C) est le composant (C)(i).

6. Composition selon l'une quelconque des revendications 1 à 4, dans laquelle le composant (C) est le composant (C)(ii).

7. Composition selon l'une quelconque des revendications 1 à 6, dans laquelle la concentration du composant (C) est de 1 à 110 parties en poids pour 100 parties en poids de composant (A).

8. Cristal liquide dispersé dans une matrice polymère (PDLC) préparé par un procédé comprenant le durcissement de la composition de silicone selon l'une quelconque des revendications 1 à 7, dans lequel le PDLC est transparent (défini comme ayant un facteur de transmission d'au moins 80 % pour la lumière dans la région visible (environ 400 à environ 700 nm) du spectre électromagnétique) et a un indice de réfraction de 1,42 à 1,6 à 25°C pour la lumière ayant une longueur d'onde de 589 nm.
